# EUROPÄISCHE PATENTANMELDUNG

(11) **EP 2 249 588 A2**
(43) Veröffentlichungstag der Anmeldung: **10.11.2010**
(21) Anmeldenummer: 10008436.7
(22) Anmeldetag: 06.10.2008
(51) Int. Cl.: H04R 25/00

(54) **Verfahren zur Herstellung eines Faceplates**

(30) Priorität: 09.11.2007 DE 102007053539
(62) Teilanmeldung aus: 08165881.7
(71) Anmelder: Siemens Medical Instruments Pte. Ltd., Singapore 139959 (SG)
(72) Erfinder: Nikles, Peter, 91054 Erlangen (DE); Radick, Erika, 90409 Nürnberg (DE); Schmidt, Benjamin, 90419 Nürnberg (DE); Schmitt, Christian, 91091 Grossenseebach (DE); Singer, Erwin, 90542 Eckental (DE); Wiedenbrüg, Cornelia, 91080 Spardorf (DE)
(74) Vertreter: Maier, Daniel Oliver

(57) **Zusammenfassung**

Die Erfindung gibt ein Verfahren zur Herstellung eines Faceplates (1) eines Hörgerätegehäuses (2) mit mindestens einer in eine Öffnung (12) des Faceplates einbaubaren Komponente an. Das Verfahren umfasst die Schritte:
a) Aufbau (100) des Faceplates (1) aus einem Aufbaumaterial,
b) Ermittlung (101) der Größe der Komponente (3) und der Position der Komponente (3) auf dem Faceplate (1) derart, dass bei einem Einbau der Komponente (3) in der Öffnung (12) ein vorgebbarer Abstand (6) zwischen einer Auflagefläche (4) der Komponente (3) und der der Außenseite des Faceplates (1) abgewandten Oberfläche (5) nicht unterschritten wird,
c) Auswahl (102) der Komponente (3) entsprechend Schritt b)
d) Bohren (103) einer der ausgewählten Komponente (3) entsprechenden Öffnung (12) in das Faceplate (1) in der nach Schritt b) ermittelten Position,
e) Einbau (104) der Komponente (3) in die Öffnung (12). Dadurch bleibt bei eingebauten Komponenten (3), beispielsweise Lautstärkeregler oder Programmwahlschalter, die mechanische Stabilität des Faceplates (1) gewährleistet.

## Beschreibung

Die Erfindung betrifft ein im Patentanspruch 1 angegebenes Verfahren zur Herstellung eines Faceplates mit Öffnungen zum Einbau von Komponenten.

Bei In-dem-Ohr Hörgeräten werden Bauelemente, wie zum Beispiel Mikrofon, Verstärker oder Lautsprecher, in einer Gehäuseschale integriert, die entsprechend dem Gehörgang des Hörgeräteträgers geformt ist. Die Gehäuseschale ist frontseitig mit einem Faceplate abgeschlossen. Aufgrund der Hörgeräteträger-spezifisch geformten Gehäuseschale und Faceplate, ist die Größe und Form der Faceplate variabel.

In der Faceplate sind Bedienkomponenten, wie Programmschalter und Lautstärkeregler integriert. Die Bedienkomponenten müssen sowohl von außen für einen Hörgeräteträger zugänglich sein, als auch nach innen zu den Bauelementen der Gehäuseschale Verbindung haben.

Die Patentschrift DE 41 21 311 C1 gibt ein im Ohr tragbares Hörgerät und ein Verfahren zu dessen Herstellung an. Ein Gehäuse wird von einem Faceplate, das eine sie durchdringende Montageöffnung aufweist, verschlossen.

Für einen sicheren Sitz werden die Bedienkomponenten derart in das Faceplate eingebaut, dass nach Einbau eine minimale Materialdicke des Faceplates unterhalb der Auflagefläche der Bedienkomponente als Gegendruckstütze vorhanden bleibt. Daher können die Bedienkomponenten nur in bestimmten Bereichen des Faceplates eingebaut werden. Alternativ kann eine Bedienkomponente mit größerem Durchmesser aber geringerer Einbautiefe ausgewählt werden. Dieses belegt aber eine größere Fläche des Faceplates. Eventuell muss das Faceplate deswegen größer ausgestaltet werden.

Die Patentschrift US 6,870,697 B2 gibt die Herstellung eines Hörgerätegehäuses, bestehend aus einer Faceplate und einer Gehäuseschale an, welche individuell an die Form des Gehörgangs eines Nutzers angepasst werden. Das Herstellungsverfahren beinhaltet mindestens einen automatischen Schritt auf Basis eines CAD/CAM Models eines Hörgerätegehäuses.

Die Druckschrift EP 1 641 316 A2 offenbart eine Befestigungsvorrichtung zur Aufnahme von Betätigungselementen mit einer Grundplatte eines Hörgeräts. Die Befestigungselemente werden in gebohrten Öffnungen eingebaut.

Es ist Aufgabe der Erfindung ein Herstellverfahren anzugeben, das eine einfache und sichere Positionierung von Bedienkomponenten ermöglicht.

Die Aufgabe der Erfindung wird durch das Herstellverfahren des unabhängigen Patentanspruchs 1 gelöst.

Die Erfindung beansprucht ein Verfahren zur Herstellung eines Faceplate eines Hörgerätegehäuses mit mindestens einer in eine Öffnung des Faceplates einbaubaren Komponente mit folgenden Schritten: Aufbau des Faceplates aus einem ersten Aufbaumaterial, Ermittlung der Größe und Position der Komponente derart, dass bei einem Einbau der Komponente ein vorgebbarer Abstand zwischen Auflagefläche der Komponente in der Öffnung und der der Außenseite des Faceplates abgewandten Oberfläche nicht unterschritten wird, Auswahl der entsprechenden Komponente, Bohren einer der ausgewählten Komponente entsprechenden Öffnung in das Faceplate in der ermittelten Position und Einbau der Komponente in die Öffnung.

Dies hat den Vorteil, dass die mechanische Stabilität des Faceplates auch nach einem Einbau von Komponenten gewährleistet bleibt.

In einer Ausführungsform umfasst der Aufbau des Faceplates ein Spritzgussverfahren.

Vorteilhaft daran ist die einfache und preiswerte Herstellung eines Faceplates.

Dadurch wird das Positionieren und Auswählen von Komponenten automatisiert und dadurch vereinfacht.

Weitere Besonderheiten der Erfindung werden aus den nachfolgenden Erläuterungen mehrerer Ausführungsbeispiele anhand von schematischen Zeichnungen ersichtlich.

Es zeigen:
- Figur 1:: eine Schnittansicht eines In-dem-Ohr Hörgeräts,
- Figur 2:: eine Schnittansicht eines Faceplates mit Bedienkom- ponenten,
- Figur 3:: eine Schnittansicht eines weiteren Faceplates mit Bedienkomponenten und
- Figur 4:: Ablaufdiagramm zur Auswahl und Positionierung von Bedienkomponenten.

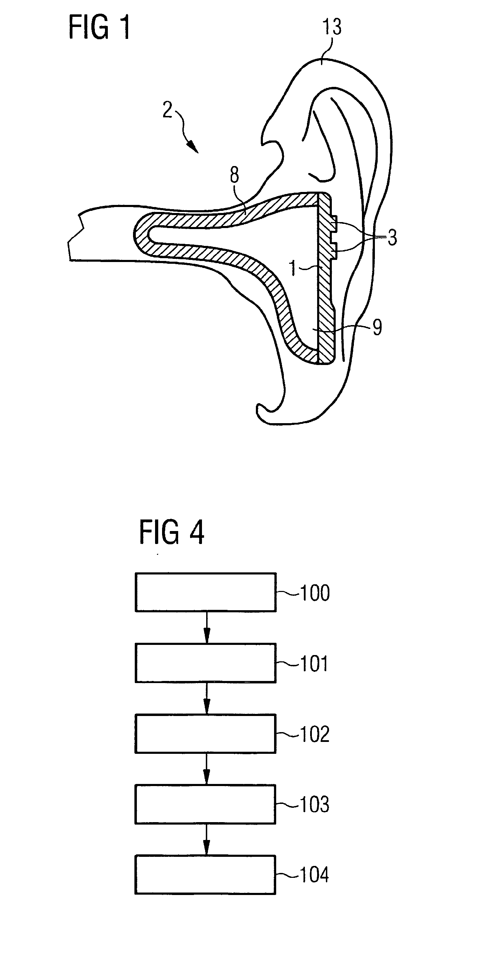

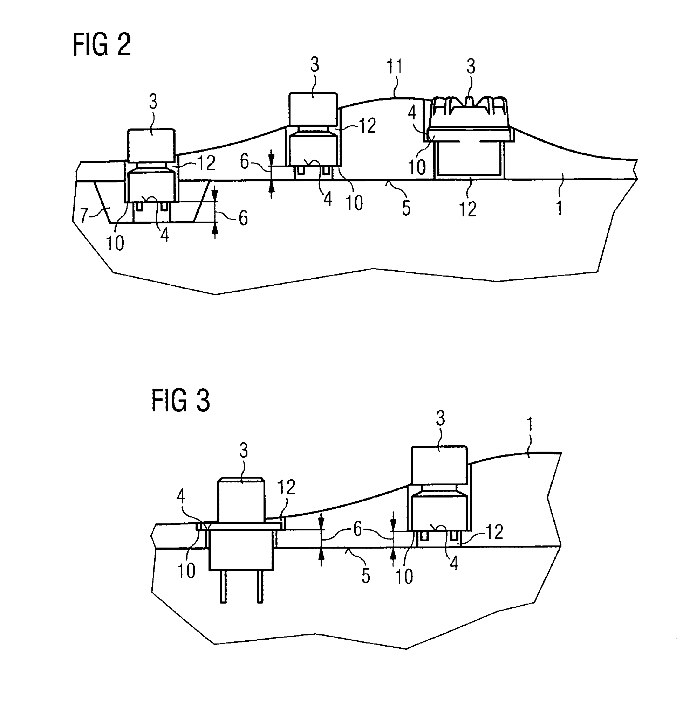

Figur 1 zeigt ein Hörgerätegehäuse 2 eines In-dem-Ohr Hörgeräts im Schnitt, welches im äußeren Gehörgang des Ohrs 13 eines Hörgeräteträgers eingesetzt ist. Das Hörgerätegehäuse 2 umfasst eine Gehäuseschale 8 und ein mit diesem verbundenen Faceplate 1, welche zur Öffnung der Ohrmuschel des Ohrs 13 hin angeordnet ist. In dem durch Gehäuseschale 8 und Faceplate 1 gebildeten Hohlraum 9 ist eine nicht dargestellte Hörgeräteelektronik integriert. Gehäuseschale 8 und Faceplate 1 bestehen beispielsweise aus Kunststoff und sind miteinander verklebt. In dem Faceplate 1 sind in den Figuren 2 und 3 näher dargestellten Komponenten 3 integriert. Diese Komponenten 3 sind in der Regel elektrische oder elektronische Bauteile, beispielsweise Lautstärkeregler oder Programmschalter, zur Bedienung des Hörgeräts.

In Figur 2 ist ein Ausschnitt eines Querschnitts durch ein erfindungsgemäße Faceplate 1 dargestellt. Das Faceplate 1 ist aus einem ersten Material beispielsweise mittels Stereo-Lithographieverfahren hergestellt. Dabei werden die Öffnungen 12 für die Komponenten 3, zum Beispiel Lautstärkeregler oder Programmschalter, beim Materialaufbau bereits vorgesehen. Die Öffnungen 12 haben Vorsprünge 10 auf denen die Komponenten 3 mit ihren Auflageflächen 4 zum Liegen kommen. Damit das Faceplate 1 genügend mechanischen Widerstand beim Betätigen, zum Beispiel Drücken, der Komponenten 3 bietet, darf der Abstand 6 zwischen Auflagefläche 4 bzw. Vorsprung 10 und der Oberfläche 5, die der Außenseite 11 des Faceplate 1 gegenüberliegt, einen minimalen Wert nicht unterschreiten. Andernfalls könnten die Komponenten 3 durch das Faceplate 1 in das Innere des Hörgerätegehäuses gedrückt werden. Ein typischer Wert für den minimalen Abstand ist beispielsweise 0,3 mm. Die Größe des Werts ist abhängig vom verwendeten ersten Material.

Im Fall der ganz links dargestellten Komponente 3 wäre dieser minimale Abstand 6 unterschritten, so dass erfindungsgemäß ein zweites Material 7, das auch identisch mit dem ersten Material sein kann, derart auf die Oberfläche 5 aufgebracht, dass der erforderliche Abstand 6 wieder hergestellt ist. Damit ist die mechanische Stabilität wieder gewährt. Das Aufbringen des zweiten Materials 7 erfolgt vorzugsweise im selben Prozess wie der Aufbau des Faceplates 1.

Da die Öffnungen 12 bereits beim Aufbau des Faceplates 1 entstehen und nicht nachträglich gebohrt werden, muss die Position und aufzubringende Schichtdicke des zweiten Materials 7 schon vor Beginn des Aufbaus des Faceplates 1 ermittelt werden. Dies erfolgt beispielsweise durch ein Rechner gesteuertes Berechnungsverfahren.

Figur 3 zeigt einen Ausschnitt eines Schnittbildes durch ein Faceplate 1 welche beispielsweise in einem Spritzgussverfahren hergestellt wurde. Auch hier darf beim Einbau von Komponenten 3 in die Öffnungen 12 ein minimaler Abstand 6 zwischen Oberfläche 5 und Auflagefläche 4 nicht unterschritten werden, um die mechanische Stabilität des Faceplates 1 nicht zu gefährden. Die Komponenten 3 liegen mit ihren Auflageflächen 4 auf Vorsprüngen 10 in den Öffnungen 12.

In der in Figur 3 gezeigten Ausführungsform werden die Öffnungen 12 nach fertig gestelltem Aufbau des Faceplates 1 gebohrt. Dabei muss bei einem potenziellen Unterschreiten des minimalen Abstands 6 eine andere Position auf der Faceplate gefunden werden, oder es muss eine andere Komponente 3, welche eine geringere Einbautiefe aber einen größeren Durchmesser hat, ausgewählt werden. Um die gleichbleibende Qualität dieses Suchvorgangs nach einer geeigneten Komponente 3 und ihrer Position zu gewährleisten, wird dieses Verfahren erfindungsgemäß durch einen automatischen Prozess durchgeführt. Dazu läuft ein Computerprogramm auf einem Automatisierungssystem ab, welches beispielsweise mit einer Bohrvorrichtung zum Bohren der Öffnungen 12 verbunden ist. Das Automatisierungssystem gibt den Durchmesser und die Lage der Öffnungen 12 der Bohrvorrichtung vor.

Figur 4 zeigt schematisch den Verfahrensablauf der Herstellung eines Faceplates 1 eines Hörgerätegehäuses 2 mit mindestens einer in eine Öffnung 12 des Faceplates 1 einbaubaren Komponente 3 mit den Schritten:
- Aufbau 100 des Faceplates aus einem ersten Aufbaumaterial,
- Ermittlung 101 der Größe und Position der Komponente 3 derart, dass bei einem Einbau der Komponente 3 ein vorgebbarer Abstand 6 zwischen Auflagefläche 4 der Komponente 3 in der Öffnung 12 und der der Außenseite des Faceplates 1 abgewandten Oberfläche 5 nicht unterschritten wird,
- Auswahl 102 der Komponente entsprechend Schritt 101,
- Bohren 103 einer der ausgewählten Komponente 3 entsprechenden Öffnung 12 in das Faceplate 1 in der nach Schritt 101 ermittelten Position und
- Einbau 104 der Komponente 3 in die Öffnung 12.

Zur Automatisierung können die unterschiedlichen Schritte der Herstellungsverfahren in einem Computerprogrammprodukt implementiert werden und auf einem Automatisierungssystem ausgeführt werden.

### Bezugszeichenliste

- 1: Faceplate
- 2: Hörgerätegehäuse
- 3: Komponente
- 4: Auflagefläche
- 5: Oberfläche des Faceplates
- 6: Vorgebbarer Abstand
- 7: zweites Material
- 8: Gehäuseschale
- 9: Hohlraum
- 10: Vorsprung in der Öffnung 12
- 11: Außenseite
- 12: Öffnung
- 13: Ohr
- 100: Aufbau des Faceplates
- 101: Ermittlung der Größe und Position der Komponente
- 102: Auswahl der Komponente
- 103: Bohren einer Öffnung
- 104: Einbau der Komponente

## Patentansprüche

1. Verfahren zur Herstellung eines Faceplates (1) eines Hörgerätegehäuses (2) mit mindestens einer in eine Öffnung (12) des Faceplates einbaubaren Komponente (3) mit den Schritten in folgender Reihenfolge:
a) Aufbau (100) des Faceplates (1) aus einem Aufbaumaterial,
b) Ermittlung (101) der Größe der Komponente (3) und der Position der Komponente (3) auf dem Faceplate (1) derart, dass bei einem Einbau der Komponente (3) in der Öffnung (12) ein vorgebbarer Abstand (6) zwischen einer Auflagefläche (4) der Komponente (3) und der der Außenseite des Faceplates (1) abgewandten Oberfläche (5) nicht unterschritten wird,
c) Auswahl (102) der Komponente (3) entsprechend Schritt b)
d) Bohren (103) einer der ausgewählten Komponente (3) entsprechenden Öffnung (12) in das Faceplate (1) in der nach Schritt b) ermittelten Position,
e) Einbau (104) der Komponente (3) in die Öffnung (12).

2. Verfahren nach Anspruch 1,
**dadurch gekennzeichnet,**
**dass** die Auflagefläche (4) der Komponente (3) beim Einbau (104) auf einem Vorsprung (10) der Öffnung (12) zum Liegen kommt.

3. Verfahren nach Anspruch 1 oder 2,
**dadurch gekennzeichnet,**
**dass** der Aufbau des Faceplates (1) ein Spritzgussverfahren umfasst.
